# FASCICULE DE BREVET EUROPEEN

(11) **EP 2 211 608 B1**
(45) Date de publication et mention de la délivrance du brevet: **30.11.2016**
(21) Numéro de dépôt: 08870982.9
(22) Date de dépôt: 11.09.2008
(51) Int. Cl.: A01K 91/06, A01K 97/12, A01K 87/00

(54) **PINCE FIL A FERMETURE MAGNETIQUE**
LEINENKLAMMER MIT MAGNETVERSCHLUSS
LINE-CLAMP WITH MAGNETIC LOCKING

(30) Priorité: 25.09.2007 FR 0757826
(43) Date de publication de la demande: 04.08.2010
(73) Titulaire: Fun Fishing, 35640 Martigne Ferchaud (FR)
(72) Inventeur: MARTIN, Franck, 35640 Martigné Ferchaud (FR)
(74) Mandataire: Vidon Brevets & Stratégie
(86) Numéro de dépôt international: PCT/FR2008/001275
(87) Numéro de publication internationale: WO 2009/090318

(56) Documents cités:
- EP-A- 0 602 879
- EP-A- 1 234 501
- US-A- 4 015 362

## Description

### 1. Domaine de l'invention

Le domaine de l'invention est celui de la pêche de loisir, notamment à la carpe.Plus précisément, l'invention concerne les équipements utilisés par les pêcheurs, notamment ceux qui pratiquent la pêche à la carpe, tels que les indicateurs de touche et les dispositifs d'immersion de ligne.

### 2. Art antérieur et inconvénients de l'art antérieur

Au cours d'une même partie de pêche, les pêcheurs de carpes utilisent, de façon habituelle, plusieurs cannes à pêche qu'ils disposent les unes à côté des autres. Ces cannes à pêche peuvent être déposées sur des supports individuels piqués dans le sol ou sur des supports reposant sur le sol et susceptibles de recevoir plusieurs cannes à pêche.

De manière à déceler une touche, c'est-à-dire le fait qu'un poisson a mordu à un hameçon, il a été développé des détecteurs de touche.

Ces détecteurs de touches sont des équipements électroniques intégrant un palpeur sur lequel agit le fil de pêche de façon à déclencher l'émission d'un avertisseur sonore et/ou lumineux à chacun de ses déplacements en avant ou en arrière, consécutif à une touche.De tels détecteurs de touches sont particulièrement efficaces afin de signaler, de jour comme de nuit, qu'un poisson a mordu à un hameçon d'une ligne.

Toutefois, compte tenu du fait qu'un pêcheur utilise généralement plusieurs cannes à pêche, il lui est parfois difficile, après qu'il a été averti qu'une touche s'était produite, d'identifier la canne à pêche dont la ligne a subi une touche. Ceci est notamment le cas durant le jour, car les diodes sont peu visibles.

Afin de palier cet inconvénient, il a été développé des indicateurs de touche.

Un indicateur de touche est un dispositif qui permet au pêcheur d'identifier, entre plusieurs cannes à pêche, celle dont la ligne a subi une touche.

Un tel indicateur de touche est décrit notamment dans le brevet européen portant le numéro EP-B1-0602879.

Cet indicateur comprend un bras incurvé dont une des extrémités s'encastre dans une platine fixée sur un support destiné à recevoir une ou plusieurs cannes à pêche (généralement sous un détecteur de touche électronique) et l'autre extrémité reçoit une tige articulée sur laquelle une masselotte peut être déplacée manuellement afin de régler la sensibilité de l'indicateur. L'indicateur de touche est de ce fait mobile entre une position haute et une position basse.

L'autre extrémité de la tige articulée est pourvue d'une tête munie elle même d'un pince-fil destiné à maintenir le fil de pêche en tension.

Ainsi, lorsque le fil de pêche est maintenu par le pince-fil, et qu'un poisson mord à l'hameçon placé à l'extrémité du fil de pêche, la tige monte ou descend selon que le poisson tire ou relâche le fil de pêche. Ce déplacement du bras constitue un indicateur en ce qu'il permet d'identifier la canne à pêche au bout de laquelle un poisson a mordu à l'hameçon. Il permet également de savoir de quelle manière le poisson agit sur la ligne (traction ou relâchement). Si le poisson tire relativement fort sur la ligne, il peut arriver que le fil de pêche se dégage du pince-fil, ce qui constitue également une indication.Par ailleurs, la tension générée par l'indicateur de touche lorsque le fil est enclenché dans le pince fil permet d'éviter des avertissements intempestifs (générés par le détecteur électronique) liés au vent ou au courant dans un plan d'eau.

Le pince-fil mis en oeuvre dans un tel indicateur de touche comprend un corps définissant un canal ouvert susceptible d'accueillir un fil de pêche. Ce canal peut être refermé au moyen d'un doigt pivotant mobile entre une position fermée dans laquelle il forme avec le canal une boucle à l'intérieur de laquelle le fil de pêche peut être retenu, et une position ouverte dans laquelle le fil de pêche peut être librement introduit ou extrait du canal

Le doigt pivotant est maintenu dans le corps au moyen d'un axe. Un ressort inséré dans le pince-fil agit sur le doigt de façon à définir la valeur du couple devant être appliqué sur le doigt afin d'ouvrir le canal et de libérer le fil.

Le passage de l'une à l'autre des positions du doigt est obtenu par action du pêcheur sur le doigt afin d'insérer le fil à l'intérieur du canal. En outre, le passage de la position fermée à la position ouverte peut être obtenu sous l'effet de l'effort imprimé par le poisson sur le fil de pêche après que l'indicateur est monté suffisamment haut, ou peut être obtenu au cours du ferrage.

Ce type d'indicateur de touche est particulièrement efficace en ce qu'il permet au pêcheur de détecter facilement, dans la plupart des cas, la canne à pêche dont la ligne a subi une touche.

Toutefois, ce type d'indicateur présente un certain nombre d'inconvénients qui sont liés pour l'essentiel à la structure du pince-fil qu'il met en oeuvre.L'effort nécessaire à l'ouverture du canal doit être suffisamment important pour éviter que le fil de pêche se dégage du pince-fil de façon intempestive, par exemple sous l'effet d'un faible effort de traction généré sur le fil de pêche par un coup de vent ou par le courant. Cet effort doit également être suffisamment faible pour permettre un décrochage automatique du fil au cours du ferrage.Il a été indiqué plus haut que le doigt est solidarisé au corps du pince-fil au moyen d'un axe. Il a été constaté que les éléments constitutifs d'une liaison de ce type ont tendance, au cours du temps, à subir une certaine usure ou un phénomène de grippage mécanique. Il en résulte que l'effort nécessaire à faire passer le doigt de sa position fermée à sa position ouverte est susceptible de diminuer ou d'augmenter au fil des utilisations.

Or, la valeur de l'effort nécessaire à l'ouverture du canal doit être suffisamment stable pour rester représentative d'une touche et pour éviter que le fil ne reste bloqué lors du ferrage.

En effet, une telle diminution de cet effort conduit généralement à ce que le fil de pêche se dégage du pince-fil alors même qu'aucun poisson n'a mordu à l'hameçon. Le dégagement intempestif du fil de pêche constitue en conséquence une source de désagrément pour le pêcheur. De même, une telle augmentation de cet effort conduit à empêcher le dégagement automatique du fil au cours du ferrage, ce qui constitue également une source de désagrément pour le pêcheur.

Le document EP-A1-1234501 décrit un autre indicateur comprenant un pince fil. Ce pince fil comprend un corps présentant une rainure prévue pour accueillir un fil. Cette rainure peut être refermée au moyen d'un galet solidaire d'un support relié au corps par une charnière. Ce support est mobile entre une position d'ouverture et une position de fermeture de la rainure. La structure d'un tel pince fil souffre des mêmes inconvénients que celle du pince fil du document EP-B1-0602879.

Il est également connu de mettre en oeuvre un tel pince-fil dans un dispositif d'immersion de ligne décrochable, encore appelé « backlead» en anglais, tel que celui qui est décrit dans le brevet portant le numéro GB-B-2363958.

Un tel dispositif d'immersion est utilisé de façon à couler le fil de pêche et à éviter qu'il soit emporté par le courant ou par un bateau, qu'un poisson s'y cogne...

L'utilisation de ce type de pince-fil pose également des problèmes lorsqu'il est mis en oeuvre dans de tels dispositifs d'immersion de ligne.

Il est impératif que, lors de la mise en place du dispositif d'immersion de ligne par le pêcheur, l'effort nécessaire au dégagement du fil soit suffisamment important. Ceci permettra au dispositif d'immersion de coulisser le long du fil sans que la ligne soit libérée.

Toutefois, la conception du pince-fil selon l'art antérieur GB-B-2363958 ne permet pas de garantir un couple suffisamment important permettant au pêcheur, lors de la mise en place, de faire coulisser le dispositif d'immersion le long du fil sans que le doigt libère la ligne et ce dès les premières utilisations. D'autre part, la conception du pince-fil de l'art antérieur GB-B-2363958 ne permet pas de garantir, au gré des utilisations, une libération fiable du fil lors du ferrage par le pêcheur. Ceci est lié au risque de grippage du mécanisme, dû à la présence sous l'eau de micro particules pouvant s'insérer dans celui-ci.

En outre, la conception même de ce type de pince-fil impose que le dégagement du fil n'est possible que lorsqu'il forme un angle tel qu'il permet d'agir sur le doigt de façon à le placer dans la position ouverte. Une telle position n'est pas toujours atteinte au cours du ferrage ce qui conduit à ce que le dispositif d'immersion reste solidaire du fil de pêche et perturbe le pêcheur dans son action. Ceci constitue une source de désagrément pour le pêcheur.

D'autres type de pince-fil ont été proposés. Notamment, il a été proposé un pince-fil dans lequel les moyens de fermeture sont constitués par deux boules placée chacune à une extrémité d'un élément en forme de « V », les boules étant maintenues en contact sous l'effet d'un effort imprimé par un joint torique agissant sur la patte formant le « V ». Le passage des boules en position ouverte est obtenu lorsque l'effort imprimé dans le fil est suffisamment important pour vaincre l'effort de rappel élastique du joint torique.

Ce type de pince-fil présente un inconvénient lié au fait que l'élasticité du joint torique se dégrade au cours du temps. En conséquence, l'effort nécessaire pour dégager le fil du pince-fil diminue. Il n'est donc pas rare que le fil se décroche de façon intempestive de ce type de pince-fil.

### 3. Objectifs de l'invention

L'invention a notamment pour objectif de pallier ces inconvénients de l'art antérieur.

Plus précisément, un objectif de l'invention est de fournir un pince-fil dont l'effort nécessaire à l'ouverture ne soit pas soumis à variation au cours du temps.

Un autre objectif de l'invention est de mettre en oeuvre un tel pince-fil qui puisse être indifféremment mis en oeuvre sur un indicateur de touche et sur un dispositif d'immersion de ligne.L'invention a encore pour objectif de fournir un tel pince-fil qui soit simple d'utilisation.Notamment l'invention a pour objectif de fournir un tel pince-fil qui permette un dégagement automatique du fil au cours du ferrage d'un poisson tant lorsqu'il est mis en oeuvre sur un dispositif d'immersion de ligne que sur un indicateur de touche.Notamment l'invention a pour objectif de fournir un tel pince-fil dont l'effort nécessaire au dégagement du fil soit suffisamment important afin que le pêcheur puisse faire coulisser le système d'immersion le long du fil sans libération de la ligne, lorsqu'il est mis en oeuvre sur un dispositif d'immersion de ligne.

Encore un objectif de l'invention est de fournir un tel pince-fil qui soit simple à fabriquer, fiable et robuste.

### 4. Exposé de l'invention

Ces objectifs, ainsi que d'autres qui apparaîtront par la suite, sont atteints à l'aide d'un pince-fil comprenant un corps définissant un canal ouvert susceptible d'accueillir un fil de pêche et des moyens de fermeture dudit canal, lesdits moyens de fermeture étant mobiles entre une position d'ouverture et une position de fermeture dudit canal.

Selon l'invention, lesdits moyens de fermeture incluent des moyens d'attraction magnétique.Ainsi, l'invention repose sur une approche tout à fait originale de fermeture d'un pince-fil.En effet, selon l'invention, les moyens de fermeture sont mobiles entre deux positions :
- une position fermée, prise sous l'effet d'un effort imprimé par lesdits moyens d'attraction magnétique, dans laquelle les moyens de fermetures ferment le canal à l'intérieur duquel le fil de pêche peut-être maintenu ;
- une position ouverte, prise sous l'effet d'un effort imprimé sur le fil de pêche afin de l'introduire dans le canal, ou de l'en extraire, et s'opposant à l'effort d'attraction des moyens d'attraction magnétique.

Les moyens d'attraction magnétique présentent l'avantage de ne pas subir, au cours du temps, de phénomène d'usure mécanique de nature à affecter l'effort nécessaire à faire passer les moyens de fermeture en position ouverte, par opposition aux éléments constitutifs d'une liaison de type axe ou au moyens de rappel élastique de type joint torique mis en oeuvre dans les techniques de l'art antérieur. Ils présentent en outre l'avantage de conserver leur magnétisme au cours du temps.

En d'autres termes, la mise en oeuvre de tels moyens d'attraction magnétique de façon à maintenir les moyens de fermeture en position fermée permet de garantir que l'effort nécessaire à leur passage en position ouverte reste constant dans le temps.La valeur de cet effort reste à tout le moins suffisamment stable dans le temps pour prévenir une ouverture intempestive des moyens de fermeture qui conduirait à libérer le fil de pêche alors qu'aucun poisson n'a mordu à l'hameçon.

De même, du fait de la stabilité nécessaire à l'ouverture du pince-fil, l'emprisonnement du fil dans le pince-fil au cours du ferrage peut être évité.Selon une caractéristique avantageuse de l'invention, lesdits moyens de fermeture comprennent au moins un élément formant une bille mobile entre ladite position ouverte et ladite position fermée.Une telle bille, qui est avantageusement un élément disponible dans le commerce, présente l'avantage, de par son profil sphérique, de passer de façon optimale de sa position ouverte à sa position fermée sous l'effet d'un effort imprimé par le fil.Préférentiellement, lesdits moyens de fermeture comprennent deux éléments formant billes placés en regard l'un de l'autre et s'étendant le long d'un
même axe.

La mise en oeuvre de deux billes permet de fermer le canal en libérant un espace suffisant pour accueillir différents diamètres de fil de pêche. Selon une caractéristique préférentielle de l'invention, lesdits moyens d'attraction magnétique et/ou lesdits éléments formant bille présentent une rémanence Br comprise entre 1,17 et 1,26 Tesla, et une force coercitive de polarisation iHc supérieure ou égale à 955 A/m.De telles valeurs de rémanence et de force coercitive permettent respectivement de déterminer un effort de dégagement du fil qui soit tel que le fil ne peut pas se libérer du pince-fil en dehors d'une action volontaire du pêcheur, d'un ferrage ou d'un événement représentatif d'une touche de forte intensité, et de bénéficier d'un effort qui reste stable dans le temps.

Avantageusement, lesdits moyens d'attraction magnétique et/ou lesdits éléments formant bille sont réalisés dans un alliage magnétique à base de neodyme.

Ces billes peuvent être recouvertes d'une couche de Nickel afin de prévenir les risques d'oxydation. Ceci permet également de favoriser la glisse du fil sur les billes.

Les alliages de ce type présentent l'avantage de conserver au cours du temps leur magnétisme. Ainsi, l'utilisation d'un tel alliage permet de garantir que l'effort nécessaire au dégagement du fil reste constant au fil des utilisations, et de prévenir en conséquence des libérations intempestives du fil ou le blocage de celui-ci.

Avantageusement, lesdits éléments formant billes présentent un diamètre compris entre 5 et 6 millimètres. Bien entendu, il pourrait être envisagé de mettre en oeuvre, dans d'autres modes de réalisation, des billes de diamètre plus important réalisées dans un matériau générant une force d'attraction plus faible, ou des billes de diamètre plus faible réalisées dans un matériau générant une force d'attraction plus forte.

Selon une caractéristique avantageuse de l'invention, ledit corps présente un réceptacle pour chacun des éléments formant bille, lesdits éléments formant bille étant mobiles en translation selon une distance « d » à l'intérieur de leur réceptacle respectif.

Ce débattement permet de dégager un espace suffisant, lorsque les billes sont en position ouverte, de façon à permettre l'introduction ou l'extraction d'un fil de pêche.

Dans ce cas, ladite distance « d » est avantageusement comprise entre 1 et 2 millimètres.

Une telle valeur de débattement peut permettre de mettre en oeuvre un pince-fil selon l'invention pour la plupart des diamètres de fils (ou tresse) de pêche couramment utilisés. Bien sûr la distance séparant les billes en position ouverte pourra être adaptée en fonction des caractéristiques dimensionnelles du fil de pêche.

Selon une autre caractéristique avantageuse de l'invention. ledit corps présente des premiers moyens de solidarisation à un équipement annexe.Un pince-fil selon l'invention peut ainsi avantageusement être mis en oeuvre dans divers dispositifs utilisés dans la pratique de la pêche à la carpe.

Ainsi, ledit équipement annexe peut avantageusement être un indicateur de touche comprenant une tige incurvée dont une première extrémité est liée à rotation dans une platine fixée à un support de canne à pêche, et une deuxième extrémité présente des deuxièmes moyens de solidarisation complémentaires desdits premiers moyens de solidarisation.

Préférentiellement, ledit corps est mobile en rotation selon un axe sensiblement parallèle à l'axe dudit bras. Ceci permet de faciliter l'introduction et l'extraction du fil. Dans une autre variante, ledit équipement annexe peut être un dispositif d'immersion de ligne comprenant un élément formant poids et un élément d'ancrage d'un fil de retenu dudit dispositif d'immersion. Dans ce cas, ledit élément formant poids présente avantageusement des troisièmes moyens de solidarisation complémentaires desdits premiers moyens de solidarisation.Préférentiellement, ledit corps s'étend essentiellement perpendiculairement audit élément formant poids.Ainsi, lorsque le dispositif d'immersion de fil repose sur le fond d'un plan d'eau, le pince-fil est orienté essentiellement verticalement en direction de la surface, de sorte qu'il est placé dans une position optimale, ou à tout le moins proche de cette position, dans laquelle le dégagement du fil peut se produire automatiquement lors du ferrage.Préférentiellement, ledit élément formant poids présente une masse comprise entre 70 g et 120 g.***5***. ***Liste des figures***

D'autres caractéristiques et avantages de l'invention apparaîtront plus clairement à la lecture de la description suivante de modes de réalisation préférentiels, donnés à titre de simples exemples illustratifs et non limitatifs, et des dessins annexés, parmi lesquels :
- la figure 1 est une vue en perspective d'un pince-fil selon l'invention ;
- la figure 2 illustre une vue du pince-fil représenté à la figure 1 dans une position dépliée ;
- la figure 3 illustre une vue en coupe du pince-fil illustré à la figure 1 ;
- la figure 4 est une vue en coupe d'un dispositif d'immersion mettant en oeuvre un pince-fil selon l'invention ;
- les figures 5 et 6 illustrent deux vues en perspectives du dispositif d'immersion de ligne de la figure 4 dans lequel le pince-fil est respectivement en position ouverte et en position fermée ;
- la figure 7 est une figure illustrant un dispositif d'immersion en cours d'utilisation ;
- la figure 8 est une vue de côté d'un indicateur de touche mettant en oeuvre un pince-fil selon l'invention ;
- la figure 9 est une vue éclatée de l'indicateur de touche illustré à la figure 8 ;
- les figures 10 et 11 illustrent respectivement un indicateur de touche en position intermédiaire haute et en position basse ;
- la figure 12 est une vue en perspective d'un indicateur de touche selon l'invention.

### 6. Description d'un mode de réalisation de l'invention

### 6.1. Rappel du principe de l'invention

Le principe général de l'invention repose sur la mise en oeuvre de moyens de fermeture d'un pince-fil qui incluent des moyens d'attraction magnétique. De tels moyens d'attraction magnétique permettent, selon l'invention, de placer les moyens de fermeture en position fermée de façon à maintenir le fil prisonnier dans le pince-fil. D'autre part, la force qu'ils exercent doit être vaincue de façon à ce que les moyens d'ouverture se placent en position ouverte et que le fil puisse être librement dégagé du pince-fil.

La mise en oeuvre de tels moyens d'attraction magnétique permet, du fait que l'effort qu'ils impriment pour maintenir les moyens de fermeture en position fermée ne fluctue pas au cours du temps et au cours des utilisations, de garantir que l'effort nécessaire pour dégager le fil du pince-fil reste essentiellement constant.

Ceci prévient toute libération intempestive du fil alors qu'aucun poisson n'a mordu à l'hameçon ou toute rétention trop forte du fil lors du ferrage par le pêcheur.

### 6.2. Exemple d'un mode de réalisation d'un pince-fil selon l'invention

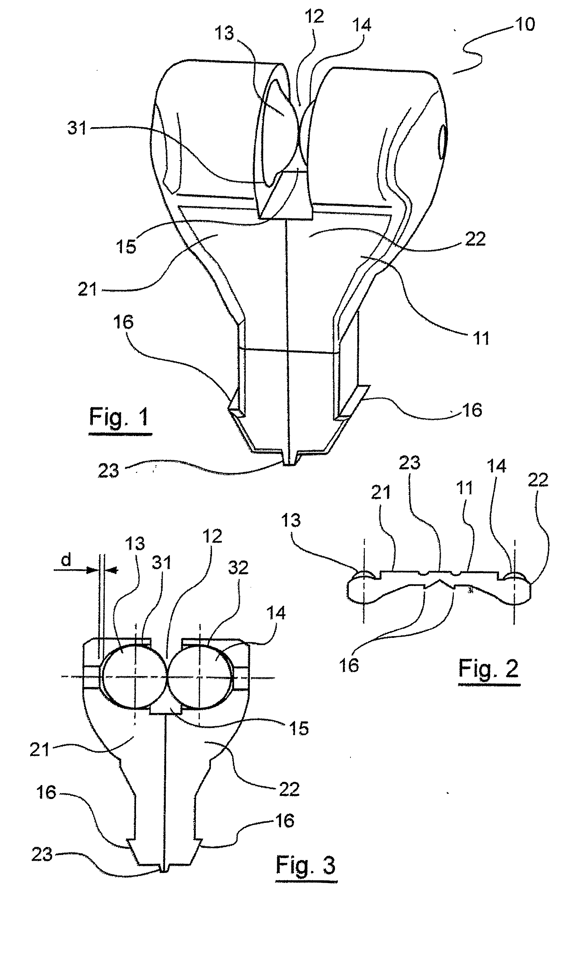

On présente, en relation avec les figures 1 à 3, un mode de réalisation d'un pince-fil selon l'invention.

Tel que cela est représenté sur la figure 1, un pince-fil 10 selon l'invention comprend un corps 11 qui définit un canal ouvert 12 susceptible d'accueillir un fil de pêche (non représenté).Tel que cela apparaît plus clairement sur la figure 2, ce corps 11 présente deux extensions 21 et 22. Ces extensions 21, 22 sont liées par l'une de leurs extrémités par une articulation 23, de sorte que les deux extensions 21, 22 peuvent être rapprochées l'une de l'autre sous l'effet d'une rotation selon l'axe de l'articulation 23.En référence à la figure 3, qui illustre une vue en coupe du pince-fil illustré aux figures 1 et 2, il apparaît que chaque extension 21, 22 présente à une autre de ses extrémités, un réceptacle 31, 32.Ces réceptacles 31, 32 sont chacun destinés à accueillir un bille 13, 14. Ces billes 13, 14 sont maintenues dans leur réceptacles 31, 32 respectifs et peuvent s'y déplacer en translation pour l'ouverture ou la fermeture du canal 12.Dans ce mode de réalisation, chaque bille 13, 14 peut être translatée d'une distance de l'ordre d'un millimètre à l'intérieur de son réceptacle 31, 32.Les billes 13, 14 sont réalisées dans un matériau magnétique. Dans ce mode de réalisation, elles sont réalisées dans un alliage de type neodyme-fer-bore.

Elles présentent un diamètre compris entre 5 et 6 millimètres, une rémanence Br comprise entre 1,17 et 1,26 Tesla et une force coercitive de polarisation iHc supérieure à 955 KA/m.

En outre, ces billes sont recouvertes d'une fine couche de nickel. Ceci permet de prévenir leur corrosion et d'améliorer le glissement du fil le long des billes.

Les billes 13, 14 sont mobiles entre deux positions :
- une position fermée, prise sous l'effet de l'effort imprimé par le magnétisme du matériau dans lequel elles sont réalisées, dans laquelle elles sont en contact l'une de l'autre et ferment le canal 12 afin de pouvoir y maintenir un fil de péche ;
- une position ouverte dans lesquels les billes 13, 14 sont éloignées de façon à permettre au fil de pêche d'être introduit ou extrait de la boucle 15.Les extensions 21, 22 présentent, dans une région proche de l'articulation 23, des moyens de solidarisation 16.

Ces moyens de solidarisation 16 sont destinés à solidariser le pince-fil à un dispositif d'immersion de ligne ou à un indicateur de touche.

### 6.3. Mise en oeuvre d'un pince-fil selon l'invention sur un dispositif d'immersion de fil de pêche

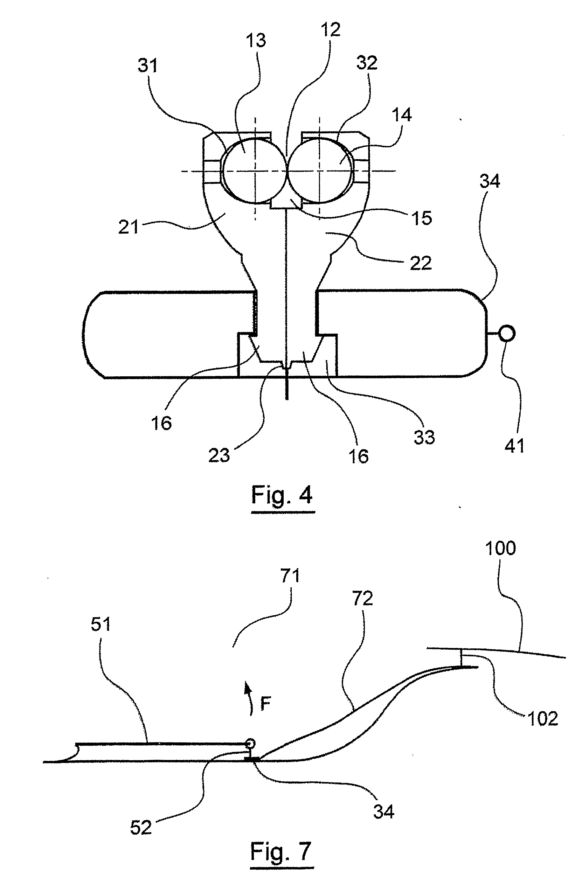

On décrit en relation avec les figures 4 à 7 la mise en oeuvre d'un pince-fil selon l'invention sur un dispositif d'immersion de ligne. Dans ce cas, les moyens de solidarisation 16 du corps 11 du pince-fil sont destinés à coopérer avec des moyens de solidarisation complémentaires 33 formés dans un élément formant poids 34 de forme essentiellement plate et dont le poids est avantageusement compris entre 70 et 120 g. Il est noté que les caractéristiques relatives à la force des moyens d'attraction magnétique pourront varier en fonction de la masse de l'élément formant poids 34. L'ensemble formé du pince-fil selon l'invention et de l'élément formant poids constitue un dispositif d'immersion 52 de fil de pêche.

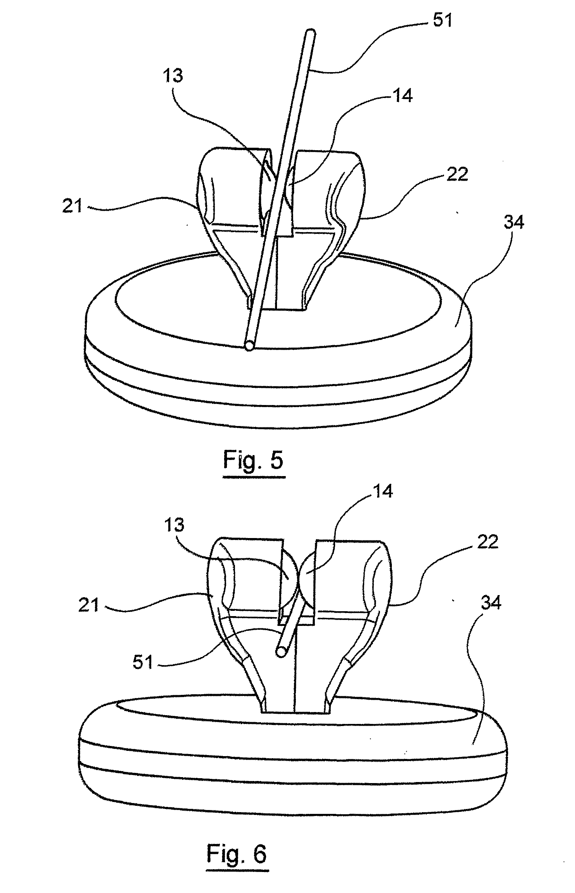

Un élément d'ancrage, prenant ici la forme d'un anneau 41 est solidarisé à l'élément formant poids 34. Cet anneau 41 permet le passage d'un fil de façon à ramener le dispositif d'immersion lorsqu'il est plongé dans un plan d'eau. Le fonctionnement du dispositif d'immersion de ligne et du pince-fil selon l'invention va maintenant être expliqué.Après que le pêcheur a lancé sa ligne et a reposé sa canne à pêche, il emprisonne le fil 51 de sa ligne avec le pince-fil. À cet effet, il introduit ce fil 51 dans le canal ouvert 12, au-dessus des billes 13, 14 qui sont maintenue en position fermée sous l'effet du magnétisme du matériau qui les compose. Le pêcheur applique ensuite sur le fil 51 un effort de nature à s'opposer à l'attraction des billes 13, 14. Les billes 13, 14 s'éloignent alors l'une de l'autre de manière à ce que le fil 51 passe dans une partie inférieure 15 du canal 12 (figure 5). Dès le passage du fil 51 dans cette partie inférieure 15 du canal 12, les billes 13, 14 se rapprochent sous l'effet de leur attraction mutuelle et referment le canal 12 de façon à emprisonner le fil 51 dans la partie inférieure 15 du canal 12 (figure 6). Le pêcheur laisse ensuite le dispositif d'immersion 52 de ligne coulisser le long du fil 51 de façon à ce qu'il pénètre le plan d'eau 71 dans lequel l'extrémité du fil 51 est plongée. Au cours de ce coulissement, l'effort d'attraction des billes est tel que l'élément formant poids 34 atteint progressivement le fond du plan d'eau, le pince fil étant orienté vers la surface sans que le fil ne se décroche.Le dispositif d'immersion est relié à une berge du plan d'eau au moyen d'un fil 72 solidarisé à l'anneau 41.

Après que le pêcheur à détecter une touche, il ferre le poisson. À cette occasion, il génère dans le fil 51 une tension. Du fait que lorsque le dispositif d'immersion est immergé dans le plan d'eau, le pince fil est dirigé essentiellement verticalement vers la surface du plan d'eau 72, l'effort F généré au cours du ferrage permet de tirer suffisamment fort sur le fil 51 de façon à ce que celui lui agisse contre l'effort d'attraction des billes 13, 14 et se libère du pince-fil. Le fait que lors de l'immersion dans le plan d'eau du dispositif d'immersion, celui-ci se place naturellement de façon que le pince-fil soit orienté
sensiblement verticalement en direction de la surface, le dégagement du fil 51 du pince-fil se fait automatiquement au cours du ferrage d'un poisson. Le fil 51 de la ligne ne restant pas solidarisé au dispositif d'immersion 52, l'action du pêcheur après le ferrage est facilitée.Du fait que le matériau dans lequel sont réalisées les billes conserve ses propriétés magnétiques, l'effort d'attraction des billes est constant au cours du temps. Ceci permet de garantir que le fil de pêche reste emprisonné au cours du coulissement du dispositif d'immersion, et qu'il se libère automatiquement au cours du ferrage.**6.3. Mise en oeuvre d'un pince-fil**

### selon l'invention sur un indicateur de touche

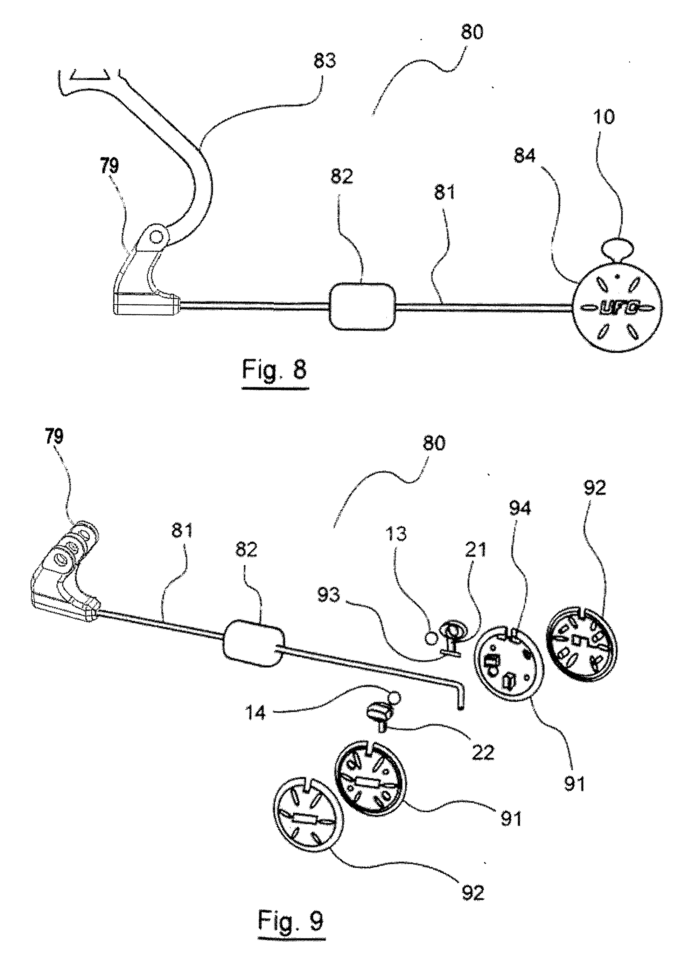

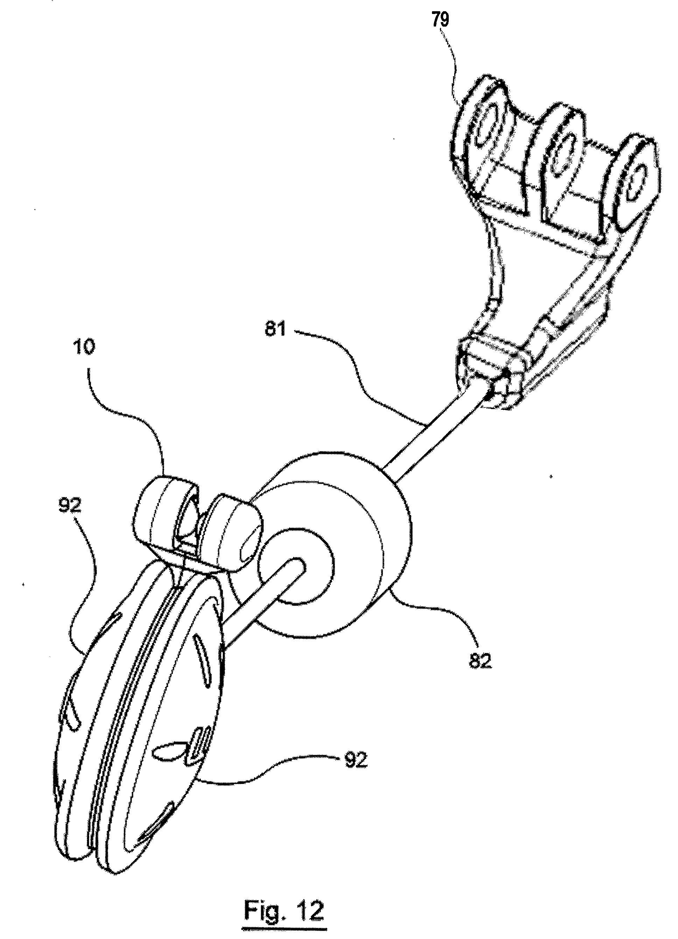

On présente, en relation avec les figures 8 à 12, un mode de réalisation d'un pince-fil selon l'invention, mis en oeuvre sur un indicateur de touche. Dans ce cas, les moyens de solidarisation 93 du corps 11 du pince-fil 10 sont destinés à coopérer avec une extrémité d'un indicateur de touche.Tel que cela est représenté sur la figure 8, un tel indicateur de touche 80 omprend une tige 81 sur lequel est montée une masselotte 82 que le pêcheur peut faire coulisser manuellement.

Un élément de liaison 79 solidaire de l'extrémité de la tige 81 et destiné à être solidarisée à rotation à un élément de support 83 lui-même destiné à être solidarisé à un support de canne(s) à pêche (non représenté).

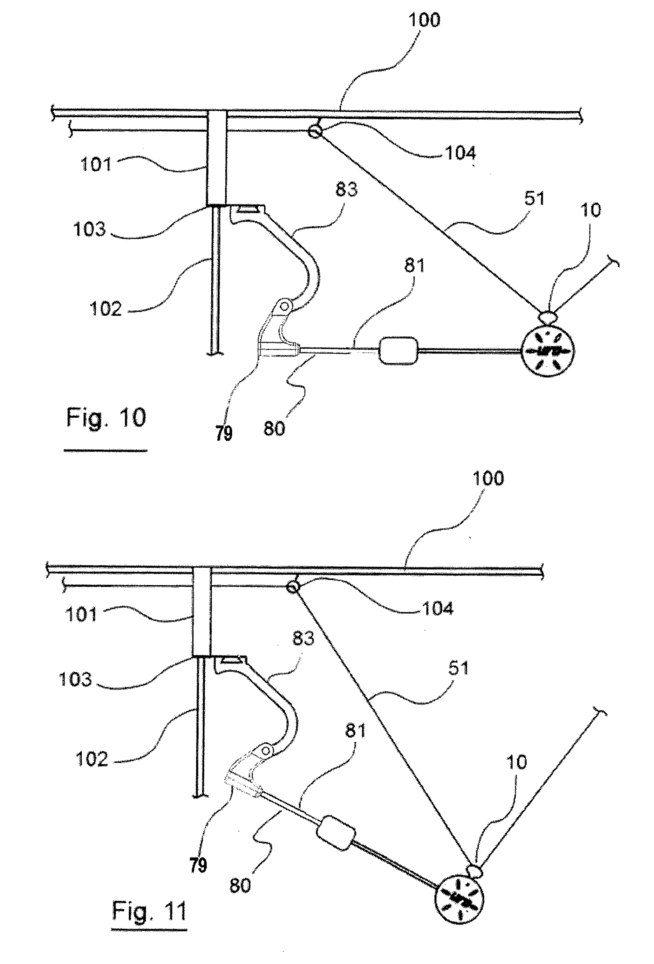

L'autre extrémité de la tige 81 est pourvue d'un élément de support 84 auquel est solidarisé un pince-fil 10 selon l'invention.Cet élément de support 84 comprend deux demi-supports 91 qui présentent des moyens de solidarisation complémentaires de façon à pouvoir être assemblés l'un à l'autre. Ces demi-supports 91 sont recouverts d'un élément formant carter 92.Le pince-fil 10 mis en oeuvre dans ce mode de réalisation est relativement similaire à celui qui a été décrit plus haut. Toutefois, une des extensions 21, 22 est pourvue d'une portion formant axe 93. Cette portion formant axe 93 est destinée à
coopérer avec un logement de forme complémentaire 94 formé dans les demi supports 91 de telle manière que le pince-fil 10 est monté mobile en rotation autour d'un axe essentiellement perpendiculaire à l'axe de la tige 81. Le fonctionnement de l'indicateur de touche mettant en oeuvre un pince-fil selon l'invention va maintenant être décrit.Tel que cela est représenté sur les figures 10 et 11, une canne à pêche 100 repose sur un détecteur de touche 101. Celui-ci est vissé sur un support 102 destiné à être piqué dans le sol. L'élément de support 83 de l'indicateur de touche 80 est solidarisé au support 102 au moyen d'une patte de fixation 103. Le fil de pêche 51 passe dans une succession d'anneaux 104 solidaires de la canne à pêche 100.

En fonctionnement normal, le fil 51 est maintenu dans le pince-fil 10. À cet effet, et comme cela a été expliqué lorsque le pince-fil 10 est mis en oeuvre dans un dispositif indicateur de touche, le pêcheur présente le fil 51 dans la partie supérieure du canal ouvert 12, au dessus des billes 13, 14. Il applique ensuite sur le fil 51 un effort orienté vers une partie inférieure du canal ouvert de façon à agir contre l'effort d'attraction magnétique des billes 13, 14. Les billes 13, 14 s'écartent et laissent le fil 51 pénétrer dans la partie inférieure 15 du canal 12. Dans le même temps, les billes 13, 14 se rapprochent sous l'effet de leur attraction mutuelle et ferment le canal ouvert 12 de façon à emprisonner le fil 51.

Le fil 51 est légèrement détendu de façon à ce que l'indicateur de touche soit placé dans une position intermédiaire (figure 10) entre sa position haute (non illustrée) et une position basse (figure 11).Lorsqu'un poisson mord à l'hameçon placé au bout du fil 51, la tige 81 de l'indicateur de touche 80 oscille entre une position haute et une position basse selon la direction selon laquelle le poisson agit sur le fil 51. Ce mouvement de l'indicateur permet à un pêcheur d'identifier, parmi plusieurs cannes à pêche, celle au bout de laquelle un poisson a mordu à l'hameçon. Il permet également d'identifier de quelle manière le poisson agit sur la ligne.

Après avoir identifié la canne à pêche au bout de laquelle un poisson a mordu à l'hameçon, le pêcheur doit ferrer le poisson. Au cours de cette opération, le pêcheur doit séparer sa canne à pêche du support 102 sur laquelle elle repose. À cette fin, il doit dégager le fil 51 du pince-fil 10 de l'indicateur de touche 80. Pour cela, le pêcheur applique sur sa canne à pêche un effort tel que le fil 51 s'oppose à la force d'attraction des billes 13 et 14. Celles-ci passent alors dans leur position ouverte dans laquelle elles permettent l'extraction du fil 51 du canal 12. On note que si un poisson ayant mordu à l'hameçon exerce sur le fil 51 un effort suffisamment important pour placer les billes 13, 14 dans leur position ouverte, le fil 51 peut se dégager du pince-fil 10 si bien que l'indicateur de touche 80 se place dans sa position basse. Ceci constitue également une indication sur le fait qu'il y a eu une touche au bout du fil 51.Toutefois, comme cela a été expliqué, l'effort devant être appliqué sur le fil 51 de façon à le libérer du pince-fil 10 est choisi de façon telle que le fil ne puisse se dégager de façon intempestive ou retienne trop fortement le fil lors du ferrage par le pêcheur.

Il est également rappelé que, le fait que les billes 13, 14 sont réalisées dans un alliage magnétique à base de neodyme, qui présente la particularité de conserver, au cours du temps, son magnétisme, conduit à ce que l'effort devant être appliqué dans le fil 51 afin d'obtenir sa libération reste constant dans le temps. En d'autres termes, cette caractéristique de l'invention prévient tout dégagement intempestif du fil ou toute rétention trop forte du fil lors du ferrage par le pêcheur, événements qui constituent de fortes sources de désagrément chez le pêcheur.

### 6.4. Variantes

Dans une variante, il peut être prévu que le pince-fil selon l'invention ne met en oeuvre qu'une seule bille. Dans ce cas, le corps du pince-fil présente un seul réceptacle à l'intérieur duquel la bille peut se translater entre une position ouverte et une position fermée. La bille peut être réalisée dans un matériau magnétique et être placée en regard d'un élément en matériau métallique,
solidarisé au corps, de façon qu'elle tende à retourner dans la position fermée. Il peut encore être prévu que la bille soit réalisée dans un matériau métallique et qu'elle soit placée en regard d'un élément magnétique solidarisé au corps.

## Revendications

1. Pince-fil comprenant un corps (11) définissant un canal ouvert (12) susceptible d'accueillir un fil de pêche (51) et des moyens de fermeture (13, 14) dudit canal (12), les moyens de fermeture (13,14) incluant des moyens d'attraction magnétique,
**caractérisé en ce que** lesdits moyens de fermeture (13, 14) sont mobiles en translation entre une position d'ouverture et une position de fermeture dudit canal (12).

2. Pince-fil selon la revendication 1, **caractérisé en ce que** lesdits moyens de fermeture (13,14) comprennent au moins un élément formant une bille (13, 14) mobile entre ladite position ouverte et ladite position fermée.

3. Pince-fil selon l'une quelconque des revendications 1 et 2, **caractérisé en ce que** lesdits moyens de fermeture (13, 14) comprennent deux éléments formant bille (13, 14) placés en regard l'un de l'autre et s'étendant le long d'un même axe.

4. Pince-fil selon l'une quelconque des revendications 2 et 3, **caractérisé en ce que** lesdits moyens d'attraction magnétique et/ou lesdits éléments formant bille (13, 14) présentent une rémanence Br comprise entre 1,17 et 1,26 Tesla, et une force coercitive de polarisation iHc supérieure ou égale à 955 A/m..

5. Pince-fil selon l'une quelconque des revendications 1 à 4, **caractérisé en ce que** lesdits moyens d'attraction magnétique et/ou lesdits éléments formant bille (13, 14) sont réalisés dans un alliage magnétique à base de néodyme.

6. Pince-fil selon l'une quelconque des revendications 2 à 5, **caractérisé en ce que** lesdits éléments formant bille (13, 14) présentent un diamètre compris entre 5 et 6 millimètres.

7. Pince-fil selon l'une quelconque des revendications 2 à 6, **caractérisé en ce que** ledit corps présente un réceptacle (31, 32) pour chacun des éléments formant bille (13, 14), lesdits éléments formant bille (13, 14) étant mobiles en translation selon une distance « d » à l'intérieur de leur réceptacle (31, 32) respectif.

8. Pince-fil selon la revendication 7, **caractérisé en ce que** ladite distance « d » est compris entre 1 et 2 millimètres.

9. Pince-fil selon l'une quelconque des revendications 1 à 8, **caractérisé en ce que** ledit corps (11) présente des premiers moyens de solidarisation (16, 93) à un équipement annexe.

10. Pince-fil selon la revendication 8, **caractérisé en ce que** ledit équipement annexe est un indicateur de touche (80) comprenant une tige (81) dont une première extrémité est liée à rotation à un support (102) de canne à pêche, et une deuxième extrémité présente des deuxièmes moyens de solidarisation (94) complémentaires desdits premiers moyens de solidarisation (93).

11. Pince-fil selon la revendication 10, **caractérisé en ce que** ledit corps (11) est mobile en rotation selon un axe sensiblement parallèle à l'axe de ladite tige (81).

12. Pince-fil selon la revendication 8, **caractérisé en ce que** ledit équipement annexe est un dispositif d'immersion de ligne (52) comprenant un élément formant poids (34) et un élément d'ancrage (41) d'un fil de retenu (72) dudit dispositif d'immersion (52).

13. Pince-fil selon la revendication 12, **caractérisé en ce que** ledit élément formant poids (34) présente des troisièmes moyens de solidarisation (33) complémentaires desdits premiers moyens de solidarisation (16).

14. Pince-fil selon l'une quelconque des revendications 12 et 13, **caractérisé en ce que** ledit corps (11) s'étend essentiellement perpendiculairement audit élément formant poids (34).

15. Pince-fil selon l'une quelconque des revendications 12 à 14, **caractérisé en ce que** ledit élément formant poids (34) présente une masse comprise entre 70 et 120 g.

## Patentansprüche

1. Leinenklammer, umfassend einen Körper (11), der einen offenen Kanal (12) definiert, der geeignet ist, eine Fischerleine (51) aufzunehmen, und Verschlussmittel (13, 14) des Kanals (12), wobei die Verschlussmittel (13, 14) magnetische Anziehungsmittel einschließen, **dadurch gekennzeichnet, dass** die Verschlussmittel (13, 14) in Translation zwischen einer Öffnungsposition und einer Verschlussposition des Kanals (12) beweglich sind.

2. Leinenklammer nach Anspruch 1, **dadurch gekennzeichnet, dass** die Verschlussmittel (13, 14) mindestens ein eine Kugel (13, 14) bildendes Element umfassen, das zwischen der Öffnungsposition und der Verschlussposition beweglich ist.

3. Leinenklammer nach einem der Ansprüche 1 und 2, **dadurch gekennzeichnet, dass** die Verschlussmittel (13, 14) zwei eine Kugel (13, 14) bildende Elemente umfassen, die einander gegenüberliegend angeordnet sind und sich entlang einer selben Achse erstrecken.

4. Leinenklammer nach einem der Ansprüche 2 und 3, **dadurch gekennzeichnet, dass** die magnetischen Anziehungsmittel und/oder die eine Kugel bildenden Elemente (13, 14) eine Remanenz Br zwischen 1,17 und 1,26 Tesla und eine Koerzitivkraft Polarisation iHc größer oder gleich 955 A/m aufweisen.

5. Leinenklammer nach einem der Ansprüche 1 bis 4, **dadurch gekennzeichnet, dass** die magnetischen Anziehungsmittel und/oder die eine Kugel bildenden Elemente (13, 14) aus einer magnetischen Legierung auf Basis von Neodym hergestellt sind.

6. Angelleine nach einem der Ansprüche 2 bis 5, **dadurch gekennzeichnet, dass** die eine Kugel bildenden Elemente (13, 14) einen Durchmesser zwischen 5 und 6 Millimeter aufweisen.

7. Leinenklammer nach einem der Ansprüche 2 bis 6, **dadurch gekennzeichnet, dass** der Körper einen Behälter (31, 32) für jedes der eine Kugel bildenden Elemente (13, 14) aufweist, wobei die eine Kugel bildenden Elemente (13, 14) in Translation entlang einer Distanz "d" im Inneren ihres jeweiligen Behälters (31, 32) beweglich sind.

8. Leinenklammer nach Anspruch 7, **dadurch gekennzeichnet, dass** die Distanz "d" zwischen 1 und 2 Millimeter beträgt.

9. Leinenklammer nach einem der Ansprüche 1 bis 8, **dadurch gekennzeichnet, dass** der Körper (11) erste Verbindungsmittel (16, 93) mit einer Zusatzausrüstung aufweist.

10. Leinenklammer nach Anspruch 8, **dadurch gekennzeichnet, dass** die Zusatzausrüstung ein Bissanzeiger (80) ist, umfassend eine Stange (81), deren erstes Ende drehfest mit einem Angelrutenhalter (102) verbunden ist, und deren zweites Ende zweite Verbindungsmittel (94) komplementär zu den ersten Verbindungsmitteln (93) aufweist.

11. Leinenklammer nach Anspruch 10, **dadurch gekennzeichnet, dass** der Körper (11) entlang einer Achse im Wesentlichen parallel zur Achse der Stange (81) drehbeweglich ist.

12. Leinenklammer nach Anspruch 8, **dadurch gekennzeichnet, dass** die Zusatzausrüstung eine Leineneintauchvorrichtung (52) ist, umfassend ein ein Gewicht bildendes Element (34) und ein Element (41) zur Verankerung eines Haltedrahtes (72) der Eintauchvorrichtung (52).

13. Leinenklammer nach Anspruch 12, **dadurch gekennzeichnet, dass** das ein Gewicht bildende Element (34) dritte Verbindungsmittel (33) komplementär zu den ersten Verbindungsmitteln (16) aufweist.

14. Leinenklammer nach einem der Ansprüche 12 und 13, **dadurch gekennzeichnet, dass** sich der Körper (11) im Wesentlichen senkrecht auf das ein Gewicht bildende Element (34) erstreckt.

15. Leinenklammer nach einem der Ansprüche 12 bis 14, **dadurch gekennzeichnet, dass** das ein Gewicht bildende Element (34) eine Masse zwischen 70 und 120 g aufweist.

## Claims

1. A line clamp, including a body (11) defining an open channel (12), likely to accommodate a fishing line (51) and means for closing (13, 14) the said channel (12), the closing means (13, 14) including magnetic attraction means, **characterised in that** the said closing means (13, 14) are displaceable in translation between an opening position and a closing position of the said channel (12).

2. A line clamp according to claim 1, **characterised in that** the said closing means (13, 14) include at least one ball-forming element (13, 14), moveable between the said open position and the said closed position.

3. A line clamp according to any one of the claims 1 and 2, **characterised in that** the said closing means (13, 14) include two ball-forming elements (13, 14), positioned opposite each other and extending along one same axis.

4. A line clamp according to any one of the claims 2 and 3, **characterised in that** the said magnetic attraction means and/or the said ball-forming elements (13, 14) present a Br remanence comprised between 1.17 and 1.26 Tesla, and a coercive polarisation force iHc, higher than or equal to 955 A/m.

5. A line clamp according to any one of the claims 1 to 4, **characterised in that** the said magnetic attraction means and/or the said ball-forming elements (13, 14) are made from a neodymium-based magnetic alloy.

6. A line clamp according to any one of the claims 2 to 5, **characterised in that** the said ball-forming elements (13, 14) have a diameter between 5 and 6 millimetres.

7. A line clamp according to any one of the claims 2 to 6, **characterised in that** the said body presents a receptacle (31, 32) for each one of the ball-forming elements (13, 14), the said ball-forming elements (13, 14) being displaceable in translation according to a distance "d" inside their respective receptacle (31, 32).

8. A line clamp according to claim 7, **characterised in that** the said distance "d" is between 1 and 2 millimetres.

9. A line clamp according to any one of the claims 1 to 8, **characterised in that** the said body (11) has first securing means (16, 93) to an annex equipment.

10. A line clamp according to claim 8, **characterised in that** the said annex equipmentis a bite indicator (80) including a shaft (81), of which a first edge is connected in rotation to a fishing rod support (102), and a second edge has second securing means (94) complementary to the said first securing means (93).

11. A line clamp according to claim 10, **characterised in that** the said body (11) is moveable in rotation about an axis, substantially parallel to the axis of the said shaft (81).

12. A line clamp according to claim 8, **characterised in that** the said annex equipmentis a line immersion device (52), comprising a weight-forming element (34) and an anchoring element (41) of a catch-thread (72) of the said immersion device (52).

13. A line clamp according to claim 12, **characterised in that** the said weight-forming element (34) present third securing means (33) complementary to said first securing means (16).

14. A line clamp according to any one of the claims 12 and 13, **characterised in that** the said body (11) mainly extends perpendicularly to the said weight-forming element (34).

15. A line clamp according to any one of the claims 12 to 14, **characterised in that** the said weight-forming element (34) has a mass between 70 and 120g.
